# EUROPEAN PATENT SPECIFICATION

(11) **EP 2 541 848 B1**
(45) Date of publication and mention of the grant of the patent: **06.05.2015**
(21) Application number: 10847758.9
(22) Date of filing: 30.12.2010
(51) Int. Cl.: H04L 12/701, H04L 29/08, H04L 12/715

(54) **SERVICE ROUTING METHOD AND SERVICE NETWORK**
DIENSTROUTINGVERFAHREN UND DIENSTNETZWERK
PROCÉDÉ DE ROUTAGE DE SERVICES ET RÉSEAU DE SERVICES

(30) Priority: 17.03.2010 CN 201010127189
(43) Date of publication of application: 02.01.2013
(73) Proprietor: Huawei Technologies Co., Ltd., Longgang District Shenzhen, Guangdong 518129 (CN)
(72) Inventor: WANG, Huan, Shenzhen Guangdong 518129 (CN); LI, Yan, Shenzhen Guangdong 518129 (CN); CHANG, Heng, Shenzhen Guangdong 518129 (CN)
(74) Representative: Riepe, Hans-Gerd
(86) International application number: PCT/CN2010/080478
(87) International publication number: WO 2011/113289

(56) References cited:
- WO-A2-2008/065122
- CN-A- 101 136 861
- CN-A- 101 652 959
- US-A1- 2003 099 237
- US-A1- 2008 219 237
- US-B1- 7 246 148

## Description

### FIELD OF THE INVENTION

The present invention relates to a method for routing services and a service network, and in particular, to a method for networking a service network, a method for routing messages, a router, and a service network.

### BACKGROUND OF THE INVENTION

The rapid development of Internet technologies greatly enriches the Internet services and contents, which enables users to have strong dependency on and loyalty to the Internet. Because Internet services are cost-effective, and in particular, some services are provided to users for free, users usually select the Internet services in place of telecom services, which causes great impacts on telecom operators. Operators are gradually transforming from a dedicated voice service provider to a comprehensive information provider. In this transformation process, operators are in urgent need for a large quantity of services/information to support the diversity and abundance of services to enhance the loyalty from users. From the perspective of technologies, operators must have effective service layer infrastructures to support the rapid development of new services and effective organization and management of a large number of services and resources (including third party services and resources) to provide users with manageable and quality-assured services.

In particular, with the emergence of mobile Internet, various multimedia services are used everywhere, and mobile broadband services have witnessed an explosive growth. Operators need to grasp the service development trend, and actively develop a combined service integrating Internet services and telecom capabilities. This requires the operators to acquire the ability to integrate services in different network fields such as telecom and Internet to make the services become controllable, operable, and quality-assured services.

However, with the increase of service features and service complexity, platform structures and technologies used by various service providers and operators in the process of developing and managing services are complex, which results in problems such as slow service development, high cost, complex service interconnection, and disordered management. Therefore, in the process of gradual integration of Internet services and telecom services, to reduce the interaction barriers and complexity between services in the whole service procedure system, a technical framework is in urgent need to normalize the discovery, operation, management, and support mechanisms between services to enhance interaction efficiency between services and reduce operation support costs.

WO 2008/065122 Al discloses a method for registering a node of an underlying network at an overlay network. Therein, the node of the underlying network registers at a registration node which initiates a propagation of registration information towards the overlay network.

### SUMMARY OF THE INVENTION

Embodiments of the present invention provide a method for networking a service network, a method for routing messages and a service network.

In one respect, an embodiment of the present invention provides a method for networking a service network, where the service network includes multiple sub-networks, each sub-network includes multiple service routers. The method includes: determining at least one global service router from the multiple service routers in each sub-network, where the global service routers in the multiple sub-networks form a global P2P layer configured to route messages of at least one type of service between different sub-networks; and creating a service cluster through the global P2P layer and the multiple sub-networks, where the service cluster is configured to route messages of a same type of service in the service cluster.

In another respect, an embodiment of the present invention provides a method for routing messages of a service network. The method includes: receiving a service interaction message, where the service interaction message includes the address of a destination service and the type of the destination service; and routing, according to the address of the destination service and the type of the destination service, the service interaction message to an accessing service router of the destination service by using at least one of the sub-network, the global P2P layer, and the service cluster.

In the last aspect, an embodiment of the present invention provides a service network. The service network includes: multiple sub-networks, where each sub-network includes multiple service routers and at least one global service router; a global P2P layer, formed by global service routers in each sub-network and configured to route messages of at least one type of service between different sub-networks; and at least one service cluster, formed by multiple service routers responsible for accessing a same type of service in multiple sub-networks and configured to route messages of a same type of service in a service cluster.

According to the technical solutions provided in embodiments of the present invention, a service network is divided into a local sub-network, a service cluster, and a global P2P layer, and services are effectively accessed to the service network according to the homes of the services, which facilitates the management and control of services. In addition, service interactions crossing sub-networks are routed by using the global P2P layer, which ensures the self-organizing ability of the whole service network. Furthermore, the service cluster can establish a shortcut for a same type of service between multiple sub-networks, which reduces the number of routing hops in the interaction between the same type of services, speeds up the service response, and mitigates the loads on the global P2P layer.

### BRIEF DESCRIPTION OF THE DRAWINGS

To illustrate the technical solution according to the embodiments of the present invention or in the prior art more clearly, the accompanying drawings for describing the embodiments or the prior art are given briefly below. Apparently, the accompanying drawings in the following description are only some embodiments of the present invention, and persons of ordinary skill in the art may derive other drawings from the accompanying drawings without any creative effort.
FIG. 1 is schematic structural diagram of a service network according to an embodiment of the present invention;
FIG. 2 is a functional block diagram of a service router according to an embodiment of the present invention;
FIG. 3 is an overall schematic flowchart of a networking method according to an embodiment of the present invention;
FIG. 4 is an overall schematic flowchart of a method for routing messages according to an embodiment of the present invention;
FIG. 5 is a first flowchart of signaling interaction for routing with a sub-network according to an embodiment of the present invention;
FIG. 6 is a second flowchart of signaling interaction for routing with a sub-network according to an embodiment of the present invention;
FIG. 7 is a first flowchart of signaling interaction for routing messages in a service cluster according to an embodiment of the present invention;
FIG. 8 is a second flowchart of signaling interaction for routing messages in a service cluster according to an embodiment of the present invention;
FIG. 9 is a flowchart of signaling interaction for routing messages between sub-networks according to an embodiment of the present invention;
FIG. 10 is a flowchart of creating a global P2P layer according to an embodiment of the present invention; and
FIG. 11 is a flowchart of creating a service cluster according to an embodiment of the present invention.

### DETAILED DESCRIPTION OF THE EMBODIMENTS

For better understanding of the objective, technical solution, and merit of the embodiments of the present invention, the technical solutions of embodiments of the present invention are hereinafter described in detail with reference to the accompanying drawings. It is evident that the embodiments are only exemplary ones, rather than all embodiments. Those skilled in the art may derive other embodiments from the embodiments given herein without making any creative effort, and all such embodiments are covered in the protection scope of the present invention.

A service network provided in embodiments of the present invention is a virtual overlapped service network established based on a physical network layer, and provides a collaborative operating and supporting environment for all services on a unified, secure, and highly-efficient basis.

By using a method for networking service network provided in an embodiment of the present invention, the service network is divided into multiple sub-networks; each sub-network may adopt different routing protocols according to the requirements and characteristics of the sub-network. In this way, local services are accessed by local service routers. At least one service router is elected or manually selected from each sub-network to join in a global peer to peer (P2P) network layer (global P2P layer) to route messages between sub-networks. In addition, a service type related service cluster is created dynamically between multiple sub-networks according to the service type to accelerate the route of this type of service to improve the user experience.

The service network provided in an embodiment of the present invention includes multiple sub-networks, a global P2P layer, and at least one service cluster. The sub-network may be divided according to a physical network or an administrative domain. Each sub-network includes multiple service routers, and one service router may be used as a node. In each sub-network, a routing protocol may be selected according to such features as scale, service requirements, and management requirements. In each sub-network, at least one service router may be elected or specified to join in a global P2P layer, that is, each sub-network further includes at least one global service router. The global P2P layer is responsible for routing messages between sub-networks, that is, it may be configured to route at least one type of service between different sub-networks. Service routers responsible for accessing a same type of service between different sub-networks may form this kind of service cluster, where the service cluster is created through the above global P2P layer and multiple sub-networks, and interaction message of the same type of service may be directly forwarded through an intra-cluster node.

Optionally, the above service cluster may include a cluster-head node and multiple cluster member nodes. The cluster-head node is configured to: store routing information of the multiple cluster member nodes, and forward messages between the multiple cluster member nodes. The cluster member nodes communicate with each other through the cluster-head node. For example, the cluster-head node is configured to forward messages interacted between the cluster member nodes. Or the cluster-head node provides each cluster member node with querying service, so that each cluster member node forwards messages directly according to the query result rather than through the cluster-head node.

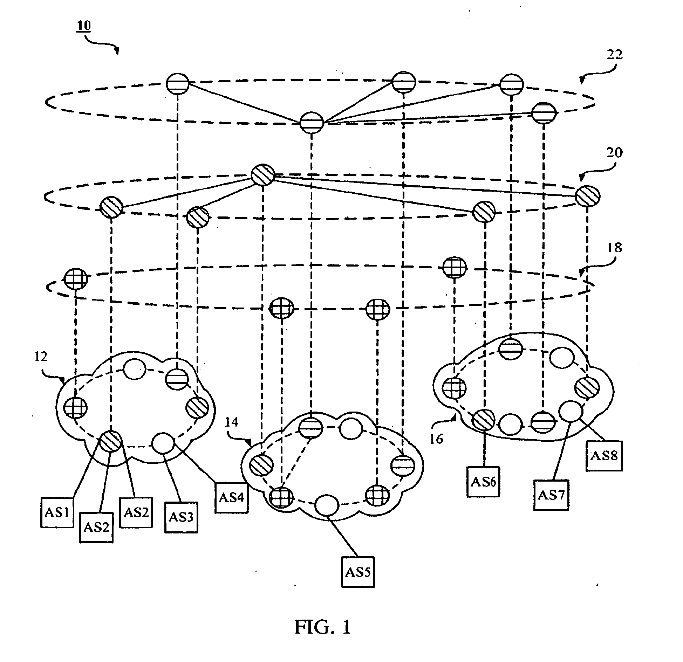

The following describes a service network provided in an embodiment of the present invention by taking some examples. As shown in FIG. 1, a service network 10 used as an example of an embodiment of the present invention includes:
three sub-networks 12, 14, and 16, configured to route messages in each sub-network respectively, where each sub-network may select its respective routing protocol according to features such as scale, service requirements, and management requirements. In actual implementation, the number of sub-networks may be larger than 3;
a global P2P layer 18, created by electing or specifying at least one service routerfrom each sub-network and configured to route messages between the sub-networks;
a service cluster 20, formed by service routers responsible for accessing type A service in the above sub-networks and configured to forward interaction messages of the type A service between cluster nodes of the service cluster 20; and
a service cluster 22, formed by service routers responsible for accessing type B service in the above sub-networks and configured to forward interaction messages of the type B service between cluster nodes of the service cluster 22.

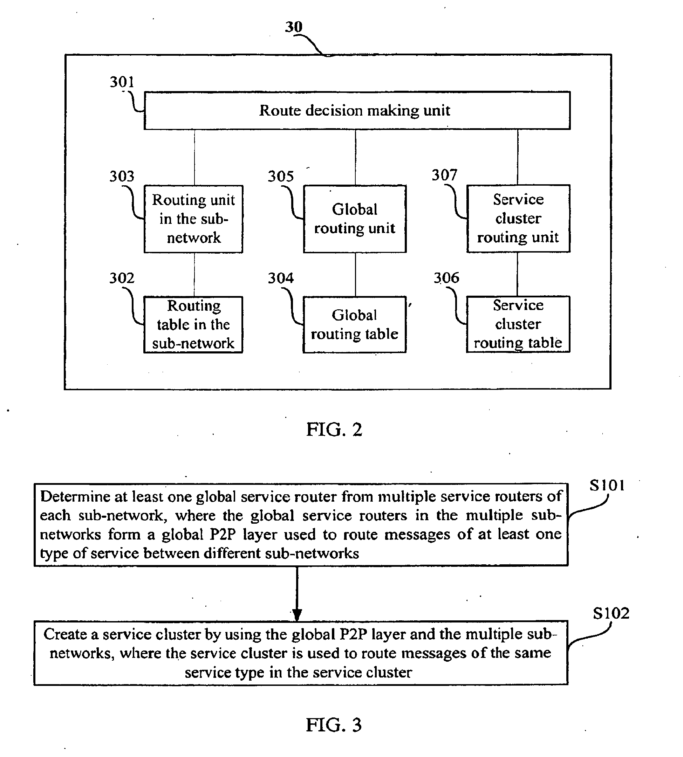

An embodiment of the present invention provides a service router. As shown in FIG. 2, a service router 30 provided in this embodiment includes:
a routing table 302 of a sub-network, configured to store routing information of other service routers in the sub-network, for example, service network address, IP address, and port number, where the routing table in the sub-network may vary with the routing protocol; and
a routing unit 303 of a sub-network, configured to route, according to the routing table 302 in the sub-network, services transmitted in the sub-network, for example, forward messages whose destination address is within the sub-network. Further, the routing unit of the sub-network may be further configured to maintain the topology of the sub-network.

Optionally, in an embodiment, the service router located at the global P2P layer may further include:
a global routing table 304, configured to store routing information of a service router joining in the global P2P layer, where the routing information may include a P2P layer ID, IP address, and port number of the service router;
a global routing unit 305, configured to: route, according to the global routing table 304, at least one type of service transmitted between sub-networks, for example, forward messages between sub-networks, and maintain the topology of the global P2P layer; and
a route decision making unit 301, configured to: judge the type and destination address of messages, and determine which routing protocol is used to forward the messages according to the type and destination address of the messages.

In an embodiment, the service or resource has a globally unique addressing in the service network, and the addressing solution of the service may be designed by operators, for example, the service may adopt the following addressing format:
service ID. service type. sub-network ID. service network ID.

For example, e-tour.mushup.shenzhen.servicenetwork.com

The service router also has a globally unique addressing in the service network. The addressing solution is similar to that of the service, for example, service router ID.[service type].sub-network ID.service network ID, where the service type is optional.

For example, sr0124.mushup.shenzhen.servicenetwork.com

A service and a service router accessing the service may have a same service network address suffix: service type. sub-network ID. service network ID.

The P2P ID of the service router is a string combining characters and numerical numbers, and can be obtained through calculation, for example, algorithm: MD5 (service network address suffix of the service router), where MD5 is a specific Hash function.

Optionally, in an embodiment, the service router joining in a type of service cluster may further include:
a service cluster routing table 306, configured to store routing information of the service router in the local service cluster, including information such as address, IP address, and port number of the service router;
a service cluster routing unit 307, configured to route, according to the service cluster routing table 306, a type of service transmitted between sub-networks, for example, forward messages of this type of service between different sub-networks; and
a route decision making unit 301, configured to: judge the type and destination address of messages, and determine which routing protocol is used to forward the messages according to the type and destination address of the messages.

It should be noted that the service router address included in the service cluster routing table 306 may include a cluster-head node of the service cluster and/or the service router address of other cluster member nodes. This depends on the pattern of the routing protocol in the service cluster. If all messages are set to be transmitted through the cluster-head node, the service cluster routing table only needs to store the information such as address, IP address, and port number of the service router of the cluster-head node. If the routing protocol allows direct communications between the cluster member nodes, the routing information of other cluster member nodes may also be stored. After the service cluster is formed, a cluster member node knows only the routing information of the cluster-head node. When the cluster member node needs to communicate with another cluster member node, it may query the cluster-head node for the routing information of a peer cluster member node, and store the obtained routing information in the service cluster routing table of the cluster member node. In this way, in subsequent communications, the cluster member node does not need to query the cluster-head node again.

Optionally, in an embodiment, the service router that is located at the global P2P layer and joins in a service cluster has the foregoing function units 301 to 307. In this case, the route decision making unit 301 may be configured to select, according to the type of accessed destination service and address of destination service, the routing unit 303 in the sub-network, the global routing unit 305 or the service cluster routing unit 307 to route the destination service to the accessing service router of the destination service.

By using the service router provided in an embodiment, operating units may change according to their roles in the service network. If the service router is only used as node in a sub-network and does not join in the global P2P layer, the global routing unit 305 and the global routing table 304 do not need to be activated. If the service router does not join in the service cluster, the service cluster routing unit 307 and the service cluster routing table 306 do not need to be activated.

The service router provided in an embodiment may access one or more than one application server or may not access any application server. The service router joining the global P2P layer is such an example.

The application server provided in an embodiment may be configured to provide various application or resource access services. In addition, the application server provided in this embodiment may also be a requestor of other applications.

An embodiment of the present invention also provides a networking method for service network. FIG. 3 is an overall schematic flowchart of a networking method according to an embodiment of the present invention. The service network provided in an embodiment of the present invention includes multiple sub-networks, where each sub-network includes multiple service routers. As shown in FIG. 3, the method includes the following steps:
Step S101: Determine at least one global service router from the multiple service routers of each sub-network, where the global service routers in the multiple sub-networks form a global P2P layer configured to route messages of at least one type of service between different sub-networks.
Step S102: Create a service cluster through the global P2P layer and the multiple sub-networks, where the service cluster is configured to route messages of a same service type in the service cluster.

The following describes the method in detail with reference to further embodiments.

In an embodiment, the service network is divided into multiple sub-networks according to the physical network or administrative domain. For example, a network in a city of a telecom operator is used as a local sub-network, and all service routers in the city form a sub-network. The sub-network may also form service routers joining in a same transmit network into a local network, for example, all service routers in a same local area network (LAN) are formed into a sub-network or all service routers in a same Metropolitan Area Network (WAN) are formed into a sub-network. The local sub-network may select a routing protocol according to the scale and service requirements. The routing protocol used in the local sub-network is not limited in embodiments of the present invention. Different local sub-networks may adopt different routing protocols to route messages between service routers in the local sub-network. The service routers in each sub-network may exchange routing information with each other according to the routing protocol determined by the home sub-network, and configure their respective routing tables. The local sub-network routing table information of the service router includes service network address of the service router, IP address of the service router, port number of the service router, and access service type in the sub-network.

Services in each sub-network may be accessed by a corresponding service router according to the service type, that is, a same type of service is accessed by a same service router. If the quantity of a type of service exceeds the access capability of a single service router, multiple service routers can be used for accessing this type of service. The above service type includes short message type, voice type, and Internet type. Table 1 shows examples of service type. As shown in Table 1, poll interactive service and weather report short messaging service belong to the short messaging service. If multiple service routers responsible for accessing a same type of service exist in a sub-network, one of these routers can join in the global P2P layer. If a service router joins in the global P2P layer, the service router needs to run two types of routing protocols, namely, intra-sub-network routing protocol and global routing protocol, which are configured to route messages in the local sub-network and messages between sub-networks.

**Table 1**

| Short Message Type | Voice Type | Internet Type |
|---|---|---|
| Poll interaction | Personalized voice news | e-tour virtual tour |
| Weather report short message | Voice mail | Super mail box |

After each local sub-network is formed, the service network may notify, through a managed node, each sub-network to elect a service router to join in the global P2P layer. The managed node may be a service directory server or a DNS (Domain Naming System) or an independently set server that implements management functions. The management server is configured to implement such functions as managing the service network, initializing and configuring the global P2P, registering the service cluster, and monitoring the service network state. Before the global P2P is initialized, global P2P parameters and parameters of each sub-network may be configured manually, for example, multicast addresses or broadcast addresses of each sub-network, global P2P protocol, port, or global P2P layer boot node.

Each sub-network may set an election policy to elect or manually configure a service router to join in the global P2P layer, and candidate nodes can run the intra-sub-network routing protocol and the global P2P routing protocol at the same time. The service router elected to join in the global P2P layer firstly queries the sub-network for whether there is a service router that has already joined in the global P2P layer. If so, the service router that has already joined in the global P2P layer is used as the boot node of the service router to start a new node joining process, for example, constructing a routing table of the service router. Or, if there is no node that has already joined in the global P2P layer in the local sub-network, the service router obtains a node list that has already joined in the global P2P layer through the DNS or the service directory server, uses the nodes in the node list as the boot node, generates their respective routing table records, and notifies related nodes of the fact that these nodes have already joined in the global P2P layer. For example, after the service router joins in the global P2P layer, the service router sends a notification message to the sub-network, where the notification message includes the address of the service router and information indicating that the service router has already joined in the global P2P layer, so that the service router in the sub-network may forward messages between sub-networks through the global P2P layer node.

The above service directory server stores the service type information and boot node information of the global P2P layer to provide query service.

If the service router that has already joined in the global P2P layer in a sub-network is failed due to overload, logout, and power off, other service routers in the sub-network detect that the service router of the global P2P layer is failed. In this way, the service routers that detect the failure trigger a process of electing a new service router of the global P2P layer in the sub-network, and broadcast an election message in the sub-network.

Other service routers in the sub-network determine whether to participate in the election according to a preset policy. For example, the preset policy is whether the load of the service router permits or whether a same type of service router has already joined in the global P2P layer in the local sub-network. When the service routers determine to participate in the election according to the preset policy, they return a response to the service routers (for example, the above service routers that detect the failure) that initiate the election; otherwise, they do not return a response. For example, service routers that do not join in a specific service cluster or that carry light loads return a response to service routers initiating the election. The service routers that initiate the routers select one or more than one service router from the candidate service routers to join in the global P2P layer, and return an election success message to the elected nodes. The process of joining in the global P2P layer by the elected service routers is similar to the above new node joining process.

If the service routers in the sub-network actively apply for joining in the global P2P layer, these service routers firstly send a joining request to the service routers that already join the global P2P layer in the local sub-network, and handle the joining process of the nodes according to the protocol used by the global P2P layer.

The process of creating the global P2P layer and subsequent maintenances may adopt a structured P2P protocol, for example, chord, CAN (Content Addressable Networks), and Pastry. Embodiments of the present invention are not limited to any specific protocol.

To ensure that services can be accurately routed to other accessing service routers in the routing process, when the P2P layer ID of the service router in the global P2P layer is determined, the shared suffix of the service addresses of services accessed by the service routers is used as the parameter for calculating the P2P layer ID of the service router. However, in the process of routing service messages at the global P2P layer, the shared suffix may also be used to calculate the key value of the service. In this way, it can be guaranteed that the message is finally routed to the service router with a P2P layer ID same as the key value, but the service router with the P2P layer ID value is responsible for accessing this type of service.

In an embodiment, the P2P layer ID of the service router generated by the P2P protocol and the key value of the service may be specified as follows:
P2P layer ID of the service router = hash (service type. sub-network ID. service network ID) service key=hash (service type. sub-network ID. service network ID.

In an embodiment, at most one of service routers responsible for accessing the same type of service in a same sub-network may be specified to join in the global P2P layer, which ensures that the P2P layer ID of the service router is unique. For the same type of services in a same sub-network, because the key value is calculated by using a same service address suffix, a same key value is generated. However, only the key value needs to be used to route the service to any one service router that provides the service access. After the service router receives the message, if the service router judges that the service belongs to the local sub-network according to the route decision making unit, the message may be routed to a final accessing service router over the local routing protocol. Therefore, the access information between the same type of services is not confused. When any one service router in the global P2P layer detects that the traffic between sub-networks of any one type of service exceeds a preset threshold or meets other preset conditions, the service router triggers a process of creating a service cluster, that is, it is used as a service cluster bootstrap node. Before creating a service cluster, the service cluster bootstrap node firstly queries the service directory on the service network for whether the service cluster exists.

The service cluster information may be pre-stored in the service directory of the service network, the type of service cluster may be pr-configured or pre-defined, and the service network can only create a defined service cluster. After the service cluster is created, the service cluster needs to be registered in the service directory, with the service cluster marked in active state, and the cluster-head node information of the service cluster is stored.

If the service cluster bootstrap node judges that a service state already exists according to the query result, it terminates the creation process; if the type of service is not defined, it also terminates the service cluster creation process. Otherwise, when the service cluster does not exist and the type of service is defined, the service cluster bootstrap node broadcasts, through the global P2P layer, a service cluster creation notification of this type of service to each sub-network. After service routers that join in the global P2P layer in each sub-network receive the service cluster creation notification, they broadcast the service cluster creation notification to all service routers in the sub-network by using the intra-sub-network routing protocol. The service router in each sub-network judges whether the service router belongs to the service type; if so, the service router returns a service cluster creation response to the service cluster bootstrap node, where the service cluster creation response includes description information of the service router, for example, it includes at least one of the following parameters: performance information, load information, IP address, port number of the service router.

After the service cluster bootstrap node collects the information of all service routers joining in the service cluster, it selects, according to a preset policy, a service router as the cluster-head node of the service cluster, and sends, by using the global P2P layer, a service cluster generation notification to at least one service router joining in the global P2P layer in each sub-network, where the notification includes information of the cluster-head node of the service cluster, for example, at least one of the following: identifier of the service cluster, service network address of the cluster-head node, IP address of the cluster-head node, port number of the cluster-head node, and service cluster routing protocol. The service routers joining in the global P2P layer in each sub-network broadcast the service cluster generation notification to the sub-network. After the service routers joining in the service cluster in each sub-network receive the service cluster generation notification, they return a cluster member registration message to the cluster-head node, where the cluster member registration message includes such information as the service address, IP address, port number, and access service range of the service routers. After the cluster-head node collects the information of each cluster member, it stores the cluster member information of the service cluster in a service cluster routing table to form a service cluster.

The above cluster-head node is configured to: record routing information of other member nodes in the cluster, and forward messages between intra-cluster member nodes or provide services of querying for routing information of cluster member nodes.

The access service range information included in the above cluster member registration message refers to what services are accessed by the service router, for example, short messaging service or multimedia service or one part of a type of service, for example, several specific services included in the short messaging service.

In an embodiment, conditions for disposing a service cluster may also be set, for example, the traffic of a service cluster is smaller than a preset threshold or the number of nodes in a service cluster is smaller than a preset number; when the disposal conditions are met, the service cluster is disposed. In this way, the service cluster may be established and disposed dynamically.

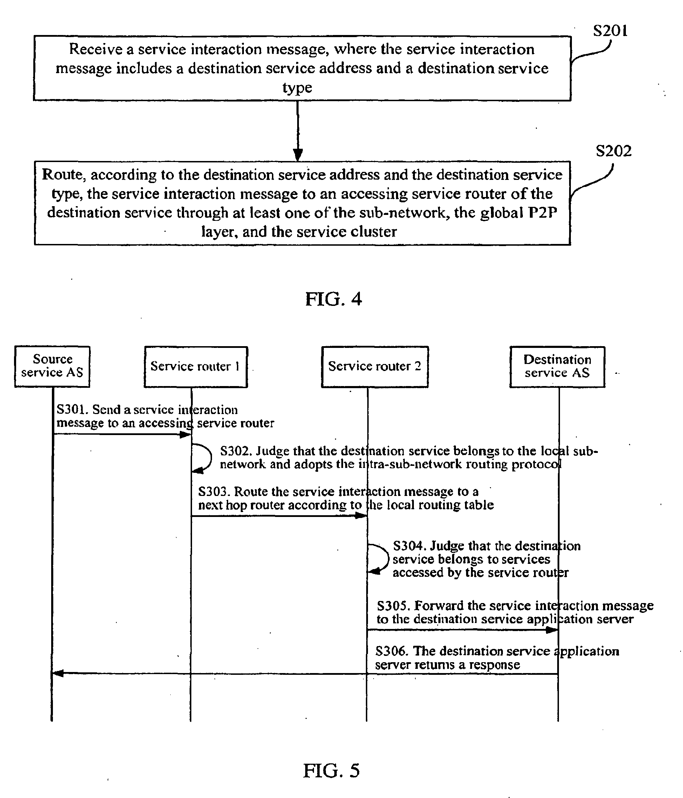

An embodiment of the present invention also provides a method for routing messages on a service network. FIG. 4 is an overall schematic flowchart of a method for routing messages according to an embodiment of the present invention. As shown in FIG. 4, the method includes following steps: Step S201: Receive a service interaction message, where the service interaction message includes a destination service address and a destination service type.

Step S202: Route, according to the destination service address and the destination service type, the service interaction message to an accessing service router of the destination service by using at least one of the following: a sub-network, a global P2P layer, and a service cluster.

The following describes the method in detail with reference to further embodiments.

In a sub-network, the service interaction message is forwarded and routed through a service router accessing the interaction message. After the accessing service router receives the service interaction message, it judges whether the destination address of a service is a service in the local sub-network by using a route decision making unit. If the destination service address belongs to the sub-network, the accessing service router routes, by using the routing protocol in the local sub-network, the service interaction message to the accessing service router of the destination service. Then, the accessing service router of the destination service forwards the service interaction message to an application server processing the destination service.

In an embodiment, the route between service routers in the sub-network may adopt different networking structures and routing solutions according to their respective features. For example, a simple networking solution is a mesh network, that is, each service router may directly communicate with any other service router in the sub-network. Each service router keeps the routing information of all other service routers in the sub-network. Before the communication, each service router queries the routing table for the routing address of a corresponding service router, and then communicates with the service router directly.

The service router routes, by using the address information of the destination service included in the service interaction message, the above service interaction message to the accessing service router of the destination service.

The following describes a specific process of routing messages in a sub-network by taking some examples.

FIG. 5 is a first flowchart of signaling interaction for routing with a sub-network according to an embodiment of the present invention. As shown in FIG. 5, the process includes following steps:
Step S301: A source service application server (for example, movie and television information short message application) sends a service interaction message to an accessing service router 1 of the source service to request to access a destination service (for example, vote short messaging service), where the service interaction message includes a destination service address, for example, vote.sms.shenzhen.servicenetwork.com.
Step S302: An accessing service router 1 of the source service (sr235.mushup.shenzhen.servicework. com) judges that the destination service belongs to the local sub-network according to the destination service address.
Step S303: The accessing service router 1 of the source service routes the service interaction message to a next hop service router 2 (sr63.sms.shenzhen.servicenetwork.com) according to a local sub-network routing protocol and a local routing table, for example, the routing table of the service router 1 is shown in Table 2.

**Table 2**

| Service Router ID | IP address | Port | Access Service Address |
|---|---|---|---|
| sr63.sms.shenzhen.servicene twork.com | 10.0.0.23 | 23567 | vote.sms.shenzhen.servicenetwork.com magazine.sms.shenzhen.servicenetwork.com |
| sr47.mutltimedia.shenzhen.s ervicenetwork.com | 10.0.0.25 | 36588 | *.multimedia.shenzhen.servicenetwork.com |
| sr75.voice.shenzhen.service network.com | 10.0.0.83 | 34893 | *.voice.shenzhen.servicenetwork.com |

Step S304: The service router 2 (sr63.sms.shenzhen.servicenetwork.com) queries for an access service list of the service router 2, and judges that the destination service belongs to a service accessed by the service router 2, that is, the service router 2 is the accessing service router of the destination service.
Step S305: The service router 2 forwards the service interaction message to a destination service application server (vote.sms.shenzhen.servicenetwork.com).
Step S306: The destination service application server returns a response to the source service application server (popstar.sms.shenzhen.servicenetwork.com).

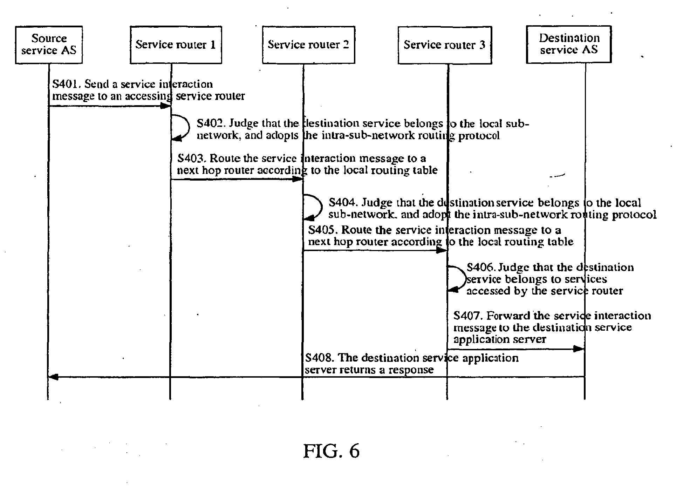

FIG. 6 is a second flowchart of signaling interaction for routing with a sub-network according to an embodiment of the present invention. As sh own in FIG. 6, the process includes following steps:
Step S401: A source service application server (for example, mushup type service) sends a service interaction message to an accessing service router 1 of the source service to request to access a destination service (for example, ticket query service), where the service interaction message includes a destination service address, for example, ticket.sms.shenzhen.servicenetwork.com.
Step S402: An accessing service router 1 of the source service (sr235.mushup.shenzhen.servicework.com) judges that the destination service belongs to the local sub-network according to the destination service address.
Step S403: The accessing service router 1 of the source service routes the service interaction message to a next hop service router 2 (sr63.sms.shenzhen.servicenetwork.com) according to a local sub-network routing protocol and a local routing table, for example, the routing table of the service router 1 is shown in Table 3.

**Table 3**

| Service Router ID | IP Address | Port | Access Service |
|---|---|---|---|
| sr63.sms.shenzhen.servicen etwork.com | 10.0.0.23 | 23567 | vote.sms. shenzhen..servicenetwork. com weather.sms.shenzhen.servicenetwork.com |
| sr47.mutltimedia.shenzhen. servicenetwork.com | 10.0.0.25 | 36588 | *.multimedia.shenzhen.servicenetwork.com. |
| sr75.voice.shenzhen.servic enetwork.com | 10.0.0.83 | 34893 | *.voice.shenzhen.servicenetwork.com |

Step S404: The service router 2 judges, according to the destination service address, that the destination service belongs to the local sub-network and does not belong to the service range accessed by the service router.
Step S405: The service router 2 routes the service interaction message to a next hop service router 3 (sr234.sms.shenzhen.servicenetwork.com) according to a local sub-network routing protocol and a local routing table, for example, the routing table of the service router 2 is shown in Table 4.

**Table 4**

| Service Router ID | IP Address | Port | Access Service |
|---|---|---|---|
| sr234.sms.shenzhen.service network.com | 10.0.0.95 | 24345 | ticket.sms.shenzhen.servicenetwork.com |
| sr47.mutltimedia.shenzhen.s ervicenetwork.com | 10.0.0.25 | 36588 | *.multimedia.shenzhen.servicenetwork.com |
| sr75.voice.shenzhen.service network.com | 10.0.0.83 | 34893 | *.voice.shenzhen.servicenetwork.com |

Step S406: The service router 3 (sr234.sms.shenzhen.servicenetwork.com) judges that the destination service belongs to services accessed by the service router 3, that is, the service router 3 is an accessing service router of the destination service.
Step S407: The service router 3 forwards the service interaction message to a destination service application server.
Step S408: The destination service application server returns a response to the source service application server.

After a service router receives a service interaction message, it judges whether the destination service address belongs to the local sub-network by using a route decision making unit. If the destination service address belongs to the local sub-network, the service router routes the service interaction message by using the local sub-network routing protocol; if the destination service address is not located inside the local sub-network, the service router judges whether the destination service belongs to a service cluster where the local service router joins; if so, the service router routes the service interaction message by using an intra-cluster routing protocol; otherwise, the service router forwards the service interaction message to other service routers in the local sub-network whose type is same as the accessing service router of the destination service for processing, or forwards the service interaction message to service routers joining in the global P2P layer in the local sub-network for processing.

The above process includes: when the service router judges that the type of received destination service belongs to a service cluster where the service router joins, the service router queries the cluster-head node for an address of the accessing service router to which the destination service address belongs. The cluster-head node queries the routing table of the cluster, and returns the address of the accessing service router of the destination service. After the service router obtains the address of the accessing service router of the destination service, it forwards the service interaction message to the accessing service router of the destination service. The above specific process may further include: Cluster member nodes in the service cluster forward the service interaction message to the cluster-head node; the cluster-head node forwards, according to the destination service address and the routing information, the service interaction message to the accessing service router of the destination service.

If the service interaction message received by the service router does not belong to the service cluster where the local service router joins, the service interaction message is forwarded to the service router responsible for accessing the destination service type in the local sub-network. If the service router responsible for accessing the destination service type finds that there is no service cluster of this type of service or that there is no accessing service router of the destination service type in the local sub-network, the service router forwards the service interaction message to a service router of a home sub-network of the destination service.

In a process of querying for a service cluster by the service router, the service router may query a service directory or a domain name server for a type of service cluster information, and then buffers the service cluster information locally. A time for storing the buffer information is set, and the buffer information is deleted after the time expires. When querying for the service cluster information next time, the service router queries the local buffer directly, without querying the service directory.

The following describes a specific process of routing messages in a service cluster according to an embodiment of the present invention by taking some examples.

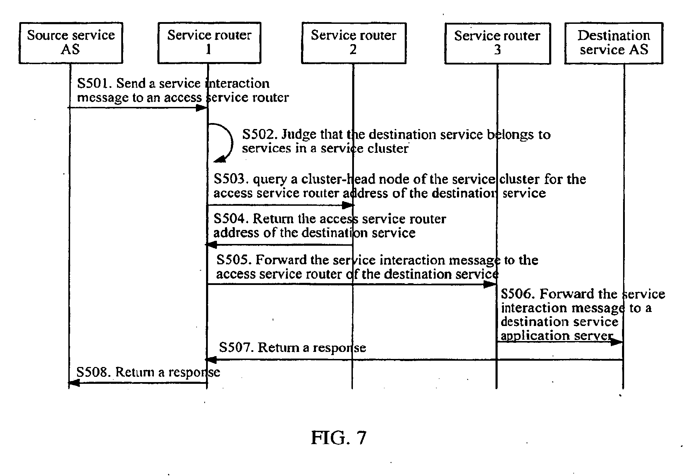

FIG. 7 is a first flowchart of signaling interaction for routing messages in a service cluster according to an embodiment of the present invention. As shown in FIG. 7, the process includes following steps:
Step S501: A source service application server (popstar.sms.shenzhen.servicenetwork.com) sends a service interaction message to an accessing service router 1 of the source service (sr542.sms.shenzhen.servicenetwork.com), where the service interaction message includes a destination service address (news.sms.beijing.servicenetwork.com) and a destination service type (type=sms application).
Step S502: The service router 1 judges that the destination service belongs to services in a service cluster, that is, it judges that there is a short message type service cluster on a service network.
Step S503: The service router 1 queries a cluster-head node 2 of the service cluster (sr523.sms.guangzhou.servicenetwork.com) for the address of the accessing service router of the destination service.
Step S504: The cluster-head node 2 queries the routing table of the cluster, and returns the address of the accessing service router of the destination service (sr244.sms beijing.servicenetwork.com). For example, the routing table of the cluster of the cluster-head node 2 is shown in Table 5.

**Table 5**

| Intra-cluster Member Service Router ID | IP Address | Port | Access Service |
|---|---|---|---|
| sr542.sms.shenzhen.servi cenetwork.com | 10.0.0.36 | 2245 | popstar.sms.shenzhen.servicenetwork.com weather.sms.shenzhen.servicenetwork.com |
| sr437.sms.guangzhou.ser vicenetwork.com | 10.0.0.25 | 36788 | newspaper.sms.guangzhou.servicenetwork.com |
| sr244.sms.beijing.service network.com | 10.0.0.63 | 34833 | news.sms.beijing.servicenetwork.com |

Step S505: The service router 1 routes, according to the address of the accessing service router of the destination service (sr244.sms beijing.servicenetwork), the service interaction message to an accessing service router 3 of the destination service (sr244.sms beijing.servicenetwork.co-m) in the service cluster over the service cluster routing protocol.
Step S506: The accessing service router 3 of the destination service forwards the service interaction message to a destination service application server (news.sms.beijing.servicenetwork.com).
Step S507: The destination service application server returns a response to the source service application server.

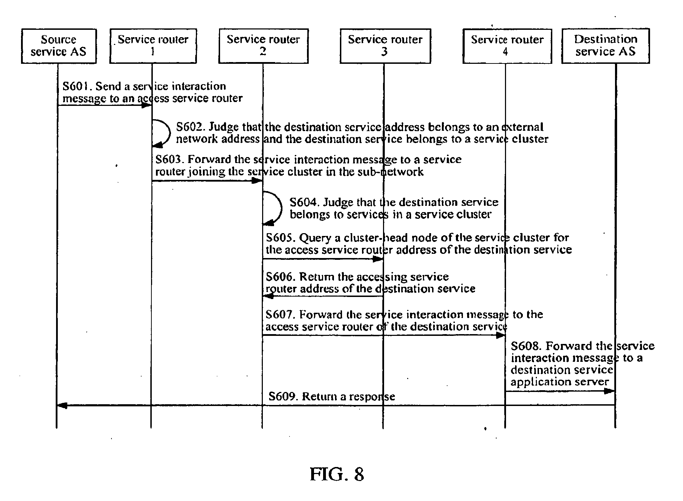

FIG. 8 is a second flowchart of signaling interaction for routing messages in a service cluster according to an embodiment of the present invention. As shown in FIG. 8, the process includes following steps:
Step S601: A source service application server (magazine.multimedia.shenzhen.servicenetwork.com) sends a service interaction message to an accessing service router 1 of the source service (sr952.multimedia.shenzhen.servicenetwork.com), where the service interaction message includes a destination service address (news.sms.beijing.servicenetwork.com) and a destination service type (type=sms application).
Step S602: After receiving the service interaction message, the accessing service router 1 of the source service judges whether the destination service belongs to the local sub-network according to the destination service address; if so, the accessing service router 1 routes the service interaction request message to the accessing service router of the destination service in the local sub-network over the local sub-network routing protocol; otherwise, the accessing service router 1 judges, according to the destination service type, whether the destination service belongs to one of service clusters on a current network. In this embodiment, if the service router 1 judges that the destination service belongs to a service cluster on the current network, the process goes to step S603.
Step S603: The accessing service router 1 of the source service forwards the service interaction message to a service router 2 (popstar.sms.shenzhen.servicenetwork.com) joining in the service cluster in the local sub-network.
Step S604: The service router 2 judges whether the destination service belongs to the service cluster.
Step S605: The service router 2 queries a cluster-head node 3 of the service cluster (sr523.sms.guangzhou.servicenetwork.com) for the address of the accessing service router of the destination service.
Step S606: The cluster-head node 3 queries the routing table of the cluster, and returns the address of the accessing service router of the destination service (sr244.sms beijing.servicenetwork.com). For example, the routing table of the cluster of the cluster-head node 3 is shown in Table 6.

**Table 6**

| Intra-cluster Member Service Router ID | IP Address | Port | Access Service |
|---|---|---|---|
| sr542.sms.shenzhen.servi cenetwork.com | 10.0.0.36 | 2245 | popstar.sms.shenzhen.servicenetwork.com weather.sms.shenzhen.servicenetwork.com |
| sr437.sms.guangzhou.ser vicenetwork.com | 10.0.0.25 | 36788 | newspaper.sms.guangzhou.servicenetwork.com |
| sr244.sms.beijing.service network.com | 10.0.0.63 | 34833 | news.sms.beijing.servicenetwork.com |

Step S607: The service router 2 routes, according to the address of the accessing service router of the destination service, the service interaction message to an accessing service router 4 of the destination service (sr244.sms beijing.servicenetwork.com) in the service cluster over the service cluster routing protocol.
Step S608: The accessing service router 4 of the destination service forwards the service interaction message to a destination service application server (news.sms.beijing.servicenetwork.com).
Step S609: The destination service application server returns a response to the source service application server.

When a route decision making unit of the service router finds that the destination service address of the service interaction message does not belong to the local sub-network and that messages cannot be routed through the service cluster, the route decision making unit needs to route, over the routing protocol in the sub-network, the service interaction message to a service router that has already joined in the global P2P layer in the local sub-network.

The global service router obtains information of the destination service, calculates a key value of the destination service according to the foregoing rule, and routes, by using the key value and a global routing table stored in the local node, the service interaction message to a service router with a P2P layer ID same as the key. The process of routing messages may vary with different P2P algorithms. In an embodiment, messages are gradually routed, by using the key value, to a service router with a P2P layer ID close to the key value, and then routed to a service router with a P2P layer ID same as the key value.

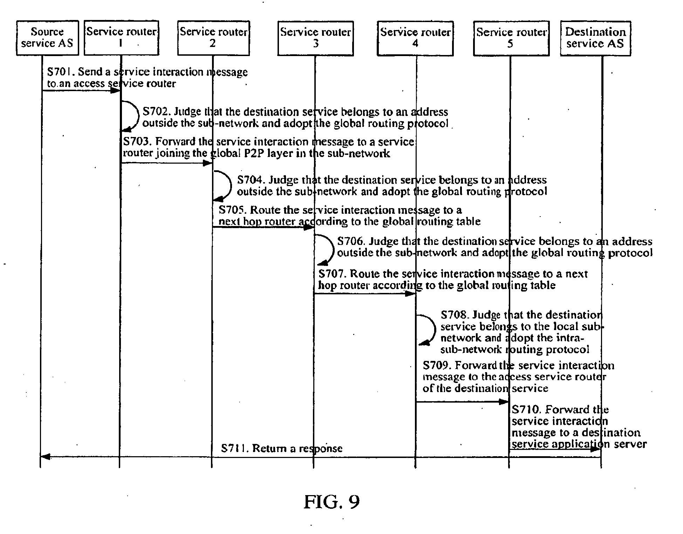

FIG. 9 is a flowchart of signaling interaction for routing messages between sub-networks according to an embodiment of the present invention. As shown in FIG. 9, the process includes the following steps:
Step S701: A source service application server (voicemail.multimedia.shenzhen.servicenetwork.com) sends a service interaction message to an accessing service router 1 of the source service application server (sr221.multimedia.shenzhen.servicenetwork.com), where the service interaction message includes a destination service address (voicemail.multimedia.beijing.servicenetwork.com) and a destination service type (type=multimedia application).
Step S702: The accessing service router 1 of the source service judges, according to the destination service address, that the destination service does not belong to the local sub-network and judges that there is no service cluster corresponding to the destination service type.
Step S703: The accessing service router 1 of the source service forwards, according to the global routing table and the global routing protocol, the service interaction message to a service router 2 (sr231.shenzhen.servicenetwork.com) that has already joined in the global P2P layer in the local sub-network.
Step S704-S705: If the service router 2 judges that the destination service address does not belong to the local sub-network according to the destination service address, the service router 2 routes, over the global routing protocol and the global routing table, the service interaction message to a next hop service router 3 at the global P2P layer.
Step S706-S707: If the service router 3 (sr463.guangzhou.servicenetwork.com) judges that the destination service does not belong to the local sub-network according to the destination service address, the service router 3 routes, over the global routing protocol and the global routing table, the service interaction message to a next hop service router 4 (sr573.beijing.servicenetwork.com) at the global P2P layer.
Step S708-S709: If the service router 4 judges that the destination service belongs to the local sub-network according to the destination service address, the service router 4 forwards, according to the local sub-network protocol and the local routing table, the service interaction message to an accessing service router 5 of the destination service.
Step S710: The accessing service router 5 of the destination service forwards the service interaction message to a destination service application server.
Step S711: The destination service application server returns a response to the source service application server.

The above embodiments of the present invention are further described by taking the following examples.

FIG. 1 illustrates a networking structure of a service network system according to an embodiment of the present invention. As shown in FIG. 1 again, the service network provided in an embodiment of the present invention includes multiple local sub-networks, where each local sub-network consists of multiple service routers. Each sub-network includes at least one global P2P layer node. A global overlay is formed between these nodes. Each service router is responsible for accessing a type of service or application. All service interaction messages of this type of service are forwarded and routed through a corresponding service router. However, service routers responsible for accessing a same type of service in different sub-network may form a service cluster. When these service routers responsible for accessing the same type of service forward this type of service message, they may directly forward messages in the service cluster to speed up the addressing, reduce the intermediate forward times, and reduce the response time of service.

The service network adopts a unified addressing solution according to the network structure, and all service routers in the local sub-network are addressed according to the following solution:
Service router ID. [service type.]sub-network ID.service network ID.

For example, a service router responsible for a message type service in a sub-network located in Shenzhen city, Guangdong province on the service network may be addressed as sr001.sms.sz.gd.servicenetwork.com, where sr001 refers to the service router ID, sms indicates that the service type is a short messaging type service, sz.gd refers to Shenzhen city, Guangdong province and corresponds to the sub-network ID, and servicenetwork.com refers to the service network ID.

A service router not responsible for accessing a specific service is addressed as sr024.sz.gd.servicenetwork.com. The addressing solution is not limited to any specific addressing solution in the present invention. Different addressing solutions may be adopted according to specific deployments of the operator, for example, according to the network layer.

Each local sub-network may organize service routers in the local sub-network over various routing protocols, which ensures that each service router may directly or indirectly forward messages to other service routers in the sub-network. The local sub-network may also has a self-organizing mechanism, for example, the service routers may join or exit dynamically, and the routing protocol can ensure the accuracy and integrity of the routing information of each service router.

After the local sub-network is constructed, a managed node may elect a global P2P layer node according to a preset policy or specify a service router to join in the global P2P layer in manual configuration mode. The above preset policy may be based on multiple election algorithms, for example, the priorities of candidate service routers may be measured according to a weighted value of such indicators as performances, storage capacities, loads, or bandwidths of the service routers. For example, the priority of a service router =CPU x 30% + memory_size x 10% + (1-load) x 30% + bandwidth x 30%. Optionally, the election algorithm may consider only the bandwidth and CPU parameters. Each service router participating in the election calculates its own priority, and returns the priority to an election bootstrap node; the election bootstrap node (the managed node) determines which service router joins in the global P2P layer, and sends an election success message to the elected service router.

The service router that is elected or specified to join in the global P2P layer calculates a P2P layer ID value by using its own service network address. To ensure that services can be accurately routed to accessing service routers of the services in the routing process, the P2P layer ID of the service router in the global P2P layer adopts a shared suffix of the service addresses of services accessed by the service router as the parameter of the P2P layer ID of the service router. However, in the process of routing messages at the global P2P layer, the shared suffix may also be used to calculate the key value of the service.

Suppose there is a service router responsible for accessing short message type services in a sub-network in Shenzhen city, Guangdong province on the service network, the P2P layer ID of the service router is calculated as follows: P2P layer ID=hash (sms.sz.gd.servicenetwork.com). In this way, it can be guaranteed that the message is finally routed to a service router with a P2P layer ID same as the key value, but the service router with the P2P layer ID value is responsible for accessing this type of service.

A service router that is requesting to join in the global P2P layer queries the sub-network for whether there is a service router that has already joined in the global P2P layer. The query may be implemented by sending a broadcast message to the sub-network or through such devices as DNS and service directory, and use the queried node as a boot node to construct its own routing table. If there is a node that has already joined in the global P2P layer in the local sub-network, the node is used as the boot node of a node that is requesting to join in the global P2P layer. If there is no node that has already joined in the global P2P layer in the local sub-network, nodes that have already joined in the global P2P layer on external networks are queried through the service directory or the DNS.

The initialization of the global P2P layer may also be completed manually. A first node of the global P2P layer is set, and information of the global P2P layer is registered in the service directory or the DNS, including such information as a list of nodes that have already joined in the global P2P layer. After a new node obtains the boot node information, the new node may obtain routing table data according to a routing algorithm used by the global P2P layer, and notify other nodes of the global P2P layer of an event that the new node joins in the global P2P layer.

In the local sub-network, a service router needs to be elected to join in the global P2P layer at the initialization phase. In addition, after the service router that has already joined in the global P2P layer in the local sub-network is failed, when an alternative node needs to be elected to join in the global P2P layer, a process of electing a service router of the global P2P layer may also be triggered. In the sub-network, there may also be a service router that actively joins in the global P2P layer, and the process is similar to the above process.

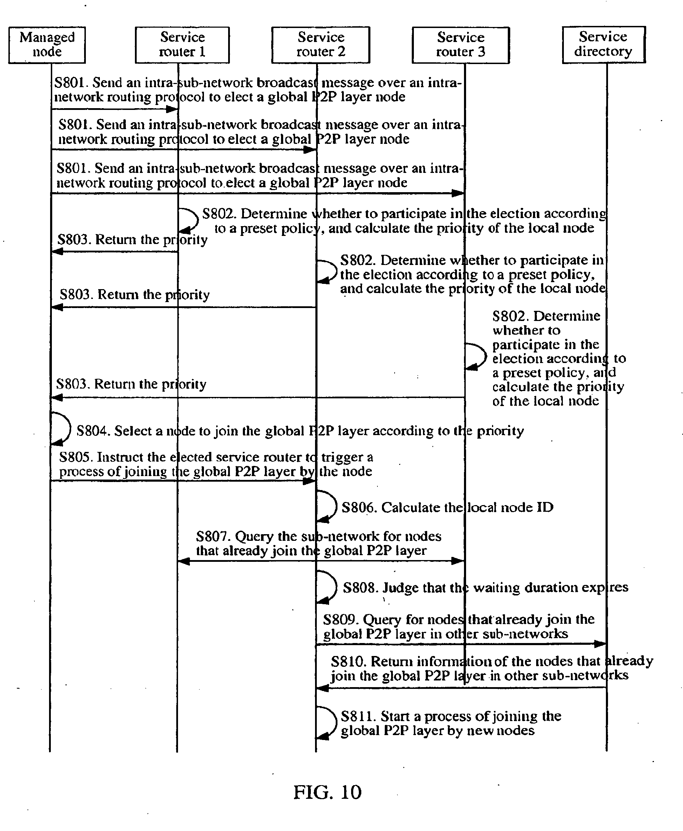

FIG. 10 is a flowchart of creating a global P2P layer according to an embodiment of the present invention. As shown in FIG. 10, the process includes the following steps:
Step S801: A managed node initiates a process of electing a node to join in a global P2P layer, and sends an intra-sub-network broadcast message over an intra-network routing protocol to elect a global P2P layer node.
Step S802: After a service router receives the election message, the service router judges whether a condition for participating in the election is met according to a preset policy, where the preset policy includes whether there is a service router responsible for accessing a same type of service that has already joined in the global P2P layer on the sub-network, whether the minimum performance requirement is met, and whether the load upper limit is exceeded. If the condition is met, the service router calculates the priority of the local node according to the following formula: priority = CPU x 30% + memory_size x 10% + (1-load) x 30% + bandwidth x 30%.
Step S803: Each service router participating in the election returns their own priorities to the managed node.
Step S804: After the managed node receives the priority information returned from all nodes participating in the election, it selects one or multiple service routers with the highest priority to join in the global P2P layer. If there are nodes that enjoy the same priority, the managed node may select one node at random.
Step S805: The managed node returns an election result to service routers elected to join in the global P2P layer to trigger a process of joining in the global P2P layer by these service routers.
Step S806: The elected service routers calculate their P2P layer IDs, for example, according to the following formula:
   P2P layer ID=hash (access service type.sub-network ID.service network ID);
Step S807: The elected service routers query the sub-network for whether there are service routers that have already joined in the global P2P layer.
Step S808: The elected service routers fail to receive a response after waiting for a preset duration, which indicates that there is no node that joins in the global P2P layer in the sub-network. Then, the process goes to step S909. If the elected service routers receive a response, they use a node that send the response as a boot node, and starts a subsequent joining process of new nodes. The specific joining process may adopt the new node joining process in the P2P protocol, for example, constructing a routing table according to the calculated P2P layer ID and obtained routing information, and notifying subsequent nodes, which is not further described.
Step S809: If the elected service router judge that the waiting duration expires, that is, they fail to receive any response in the sub-network in the preset duration, they query a service directory for nodes that have already joined in the global P2P layer in other sub-networks.
Step S810: The service directory returns a list of nodes that have already joined in the global P2P layer in other sub-networks.
Step S811: The service routers elected to join in the global P2P layer use the global P2P layer node in the received list of nodes as the boot node to start a subsequent joining process of new nodes.

To speed up the routing and response time and reduce the routing loads of the global P2P layer on the service network, a service related cluster may be dynamically created according to the type of messages routed between sub-networks. Service routers responsible for accessing a same type of service form a cluster, and forward messages directly, without routing messages through a global P2P layer. When a service router or a managed node located in the global P2P layer on the service network P2P detects that features such as traffic of a type of service at the global P2P layer meet the preset policy, the service router or the managed node starts creating a service cluster of this type of service.

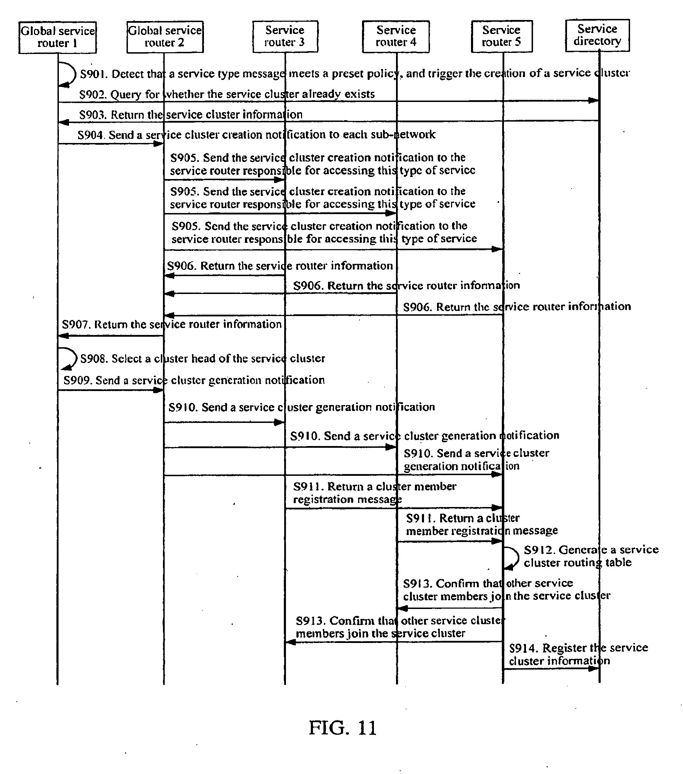

FIG. 11 is a flowchart of creating a service cluster according to an embodiment of the present invention. As shown in FIG. 11, the process includes following steps:
Step S901: When any one service router or managed node in the global P2P layer (referred as the service cluster bootstrap node) detects that a message of type A service meets a preset policy, the service router or the managed node triggers the creation of this type of service cluster. The preset policy includes the quantity or ratio of messages being greater than a preset threshold, the quantity of service routers responsible for this type of service being greater than a preset threshold, and the average number of routing hops being greater than a threshold. The average number of routing hops refers to the times of forwarding a message before the message reaches a destination application server. For example, if the routing message of a short message type poll service needs to be forwarded six times before reaching the destination application server, the average number of routing hops is six.
Step S902: When the condition for triggering the type A service cluster is met, a service cluster bootstrap node queries a service directory for whether the type A service cluster already exists.
Step S903: The service directory returns service cluster information, including such information as whether the service cluster is pre-defined and state of the service cluster.
Step S904: If the service cluster does not exist, the service cluster bootstrap node broadcasts a type A service cluster creation notification through the global P2P layer, for example, a mashup type service creation notification. Otherwise, the creation process ends.
Step S905: After service routers joining in the global P2P layer in each sub-network receive the service cluster creation message, these service routers notify the service router responsible for accessing this type of service over the intra-sub-network routing protocol.
Step S906-S907: Each service router receiving the service cluster creation notification returns their own information to the service cluster bootstrap node, for example, performance, load, IP address, and port number.
Step S908: After the service cluster bootstrap node collects information of all service routers joining in the service cluster, it selects a service router as the cluster head of the service cluster according to a preset policy, where the policy for selecting a cluster head is similar to the above election algorithm.
Step S909: The service cluster bootstrap node sends, by using the global P2P layer, a service cluster generation notification to each sub-network, where the notification includes information of the cluster-head node of the service cluster.
Step S910: The service routers joining in the global P2P layer in each sub-network broadcasts the service cluster generation notification in the sub-network.
Step S911: After the service routers joining in this type of service cluster in each sub-network receive the service cluster generation notification, they send a cluster member registration message to the cluster-head node, where the cluster member registration message includes such information as service address, IP address, port number, and access service range of each service router.
Step S912: After the cluster-head node collects the information of each cluster member node, it stores the cluster member information of the service cluster in a service cluster routing table to form a service cluster.
Step S913: The service cluster-head sends a service cluster ACK message to other service cluster members.
Step S914: The service cluster node registers the service cluster information in the service directory. The service cluster may reduce the number of routing hops and response time of a specific type of service, but also increase the complexity of the network and additional overheads in maintaining the network structure. To guarantee the manageability and maintainability of the network and ensure that benefits brought about by creating a service cluster is greater than maintenance costs, it is improper to create a large amount of service clusters on the service network, and the service cluster must be created according to the actual requirements.

A specific service cluster may be created according to current traffic features on the service network. However, when features such as the traffic of the service cluster do not meet predetermined conditions, the service cluster needs to be destroyed. The process of destroying the service cluster is relatively simple, in which only the cluster-head node of the service cluster needs to be instructed to destroy the service cluster and the cluster-head node broadcasts a service cluster destroying notification to all nodes in the service cluster. The cluster head updates the cluster head information, and changes the state of the service cluster to inactive state.

The technical solution provided in embodiments of the present invention brings about the following benefits:
In embodiments of the present invention, the service network is divided into a local sub-network, a service cluster, and a global P2P layer, and services are effectively accessed to the service network according to the categories of services, which facilitates the service management and control. In addition, the interactive traffics of most of local services are limited in the local sub-network. However, service interactions crossing the sub-network are routed through the global P2P layer, which ensures the self-organizing ability of the whole service network. In this way, service routers joining in the global P2P layer may dynamically join and exit the network, without human intervention, thus reducing network operation costs. The service cluster may set up a "shortcut" for interaction of a same type of services between multiple sub-networks, which reduces the number of routing hops in the interaction of a same type of services, increases the response speed of services, shortens the addressing time of services, reduces the loads of the global P2P layer, and improves the service interaction efficiency.

By using the networking method for service network and routing method, the reliability of the service network can be increased, the scalability of the service network can be enhanced, and network operation costs can be reduced.

It is understandable to those skilled in the art that all or some of the steps in the preceding embodiments may be implemented by related hardware instructed by a program. The program may be stored in a computer readable storage medium. When the program is executed, the processes of the preceding methods are executed. The preceding storage medium may be a magnetic disk, a compact disk, a read-only memory (ROM), or a random access memory (RAM).

The above embodiments are merely provided for elaborating the technical solution of the present invention, but not intended to limit the present invention. Although the present invention has been described in detail with reference to the foregoing embodiments, it is apparent that those skilled in the art may make modifications to the technical solutions described in the above embodiments, or may make equivalent replacements to some of the technical features without making the nature of the corresponding technical solutions depart from the scope of the embodiments of the invention.

## Claims

1. A method for networking a service network (10), wherein the service network (10) comprises multiple sub-networks(12, 14, 16), each sub-network (12, 14, 16) comprises multiple service routers (30), the method comprising:
determining (S101) at least one global service router from the multiple service routers (30) of each sub-network(12, 14, 16), wherein the global service routers of the multiple sub-networks (12, 14, 16), form a global P2P layer (18) configured to route messages of at least one type of service between different sub-networks; and
creating (S102) a service cluster (20, 22) through the global P2P layer (18) and the multiple sub-networks (12, 14, 16)" wherein the service cluster (20, 22) is configured to route messages of a same service type in the service cluster (20, 22),
**characterized in that**
the creating a service cluster(20, 22) through the global P2P layer and the multiple sub-networks (12,14, 16) comprises:
broadcasting, by an originating node at the global P2P layer (18), a service cluster creation notification to each sub-network (12, 14, 16) through the global P2P layer (18), wherein the service cluster creation notification comprises a service type of a service cluster to be created;
when the service routers(30) in each sub-network (12, 14, 16) judge that they themselves belong to the service type, returning, by the service routers (30) in each sub-network, a service cluster (20, 22) creation response to the originating node to apply for joining the service cluster (20, 22);
determining, by the originating node, a cluster-head node of the service cluster (20, 22) according to the service cluster creation response;
sending, by the originating node, a service cluster generation notification comprising cluster-head node information to service routers (30) that have already joined in the service cluster in each sub-network;
returning, by the service routers (30) that have already joined in the service cluster (20, 22) in each sub-network, a cluster member registration message to the cluster-head node; and
generating, by the cluster-head, a service cluster routing table (306) according to the cluster member registration message.

2. The method according to claim 1, wherein the multiple sub-networks are divided according to physical networks or administrative domains.

3. The method according to claim 1 or 2. wherein one service router accesses one type of services or a part of the one type of services and the service router has a same address suffix as the services accessed by the service router.

4. The method according to claim 1 or 2, wherein the determining at least one global service router comprises:
electing at least one global service router from each sub-network or specifying at least one global service router in each sub-network according to manual configurations.

5. The method according to claim 1, wherein the service cluster creation response comprises at least one of the following parameters: performance information, load information, address information of the service router.

6. The method according to claim 1, wherein the service cluster generation notification comprises at least one of the following: an identifier of a service cluster, a service network address of the cluster-head node, an IP address of the cluster-head node, a port number of the cluster-head node, and a service cluster routing protocol.

7. The method according to claim 1, wherein each global service router uses its address suffix as a parameter of a Hash Function to calculate an identifier of the service router at the global P2P layer.

8. The method according to claim 1, wherein before creating a service cluster through the global P2P layer (18) and the multiple sub-networks (12, 14, 16), the method further comprises: triggering the creation of a service cluster according to a preset service cluster creation triggering policy;
the preset service cluster creation triggering policy comprises at least one of the following:
a ratio of a traffic flow of a service type to be measured to the traffic of the global P2P layer (18) being greater than a preset threshold;
a ratio of a traffic flow of a service type to be measured at the global P2P layer (18) being greater than a preset threshold;
the quantity of accessing service routers (30) of a service of a service type to be measured being greater than a preset threshold; and
an average number of routing hops of a service of a service type to be measured from a source application server to a destination application server being greater than a preset threshold.

9. The method according to claim 1, wherein before creating a service cluster (20, 22) through the global P2P layer (18) and the multiple sub-networks (12, 14, 16), the method further comprises:
storing a pre-defined service type configured to create a service cluster (20, 22) and state information of existing service clusters (20, 22) in a service directory or a domain name server.

10. The method according to claim 9, wherein before creating a service cluster (20, 22) through the global P2P layer (18) and the multiple sub-networks (12, 14, 16), the method further comprises:
judging, by an originating node at the global P2P layer, whether a service cluster (20, 22) to be created exists and whether the service type of a service cluster (20, 22) to be created is the pre-defined service type by querying the service directory or the domain name server; and
when the service cluster to be created does not exist and the service type thereof is the pre-defined service type, executing, by the originating node at the global P2P layer, a process of creating the service cluster (20, 22).

11. A method for routing service network messages, comprising
networking a service network according to one of the preceding claims and further comprising the steps of
receiving a service interaction message, wherein the service interaction message comprises a destination service address and a destination service type;
routing, according to the destination service address and the destination service type, the service interaction message to an accessing service router (30) of the destination service by using at least one of the sub-network(12, 14, 16), the global P2P layer (18), and the service cluster (20, 22.)

12. The method according to claim11, wherein the routing, according to the destination service address and the destination service type, the service interaction message to an accessing service router of the destination service by using at least one of the sub-network (12, 14, 16), the global P2P layer (18), and the service cluster (20, 22) comprises:
when the destination service address belongs to the sub-network, routing, through the sub-network, the service interaction message to the accessing service router of the destination service in the sub-network over a sub-network routing protocol; or
when the destination service address does not belong to the sub-network and the type of the destination service is the same as the type of the service cluster, routing, through the service cluster, the service interaction message to the accessing service router of the destination service in the service cluster; or
when the destination service address does not belong to the sub-network and the type of the destination service is different from the type of the service cluster, routing, through the global P2P layer, the service interaction message to a home sub-network of the destination service over a global routing protocol; forwarding, by the home sub-network of the destination service, the service interaction message to the accessing service router of the destination service over a sub-network routing protocol.

13. The method according to claim 12, wherein before routing, through the service cluster (20, 22), the service routing message to the accessing service router (30) of the destination service, the method further comprises:
querying, by the service router, a service directory or a domain name server, for whether the destination service belongs to a service cluster corresponding to the destination service type, and storing obtained query results; and
after a preset threshold expires, deleting the query results.

14. The method according to claim 12, wherein the service cluster(20, 22) comprises a cluster-head node and multiple cluster member nodes, wherein the cluster-head node is configured to store routing information of the multiple cluster member nodes: and
the routing, through the service cluster(20, 22), the service interaction message to the accessing service router of the destination service comprises:
querying, by the cluster member nodes in the service cluster, the cluster-head node for the address of the accessing service router of the destination service according to the address of the destination service;
returning, by the cluster-head node, the address of the accessing service router of the destination service to the cluster member nodes; and
forwarding, by the cluster member nodes, the service interaction message to the accessing service router of the destination service according to the address of the accessing service router of the destination service.

15. The method according to claim 12, wherein the service cluster(20, 22) comprises a cluster-head node and multiple cluster member nodes, wherein the cluster-head node is configured to store routing information of the multiple cluster member nodes;
the routing, through the service cluster, the service interaction message to the accessing service router of the destination service comprises:
forwarding, by the cluster member nodes in the service cluster, the service interaction message to the cluster-head node; and
forwarding, by the cluster-head node, the service interaction message to the accessing service router of the destination service according to the address of the destination service and the routing information.

16. A service network (10), comprising:
multiple sub-networks (12, 14, 16), wherein each sub-network (12, 14, 16) comprises multiple service routers (30) and at least one global service router;
a global P2P layer (18) formed by global service routers in each sub-network (12, 14, 16) and configured to route messages of at least one type of service between different sub-networks (12, 14, 16); and
at least one service cluster (20, 22) formed by multiple service routers (30) responsible for accessing a same type of services and configured to route messages of a same type of services in a service cluster (20, 22).
**characterized in that**
the service network (10) is configured to determine at least one global service router from the multiple service routers (30) of each sub-network (12, 14, 16), and to create (S102) said service cluster through the global P2P layer (18) and the multiple sub-networks,
wherein for creating a service cluster through the global P2P layer (18) and the multiple sub-networks the service network is configured to
broadcast, by an originating node at the global P2P layer (18), a service cluster creation notification to each sub-network through the global P2P layer (18), wherein the service cluster creation notification comprises a service type of a service cluster to be created;
when the service routers in each sub-network judge that they themselves belong to the service type, returning, by the service routers in each sub-network, a service cluster creation response to the originating node to apply for joining the service cluster;
determine, by the originating node, a cluster-head node of the service cluster according to the service cluster creation response;
send, by the originating node, a service cluster (20, 22) generation notification comprising cluster-head node information to service routers that have already joined in the service cluster in each sub-network (12, 14, 16);
return, by the service routers that have already joined in the service cluster in each sub-network (12, 14, 16), a cluster member registration message to the cluster-head node; and
generate, by the cluster-head, a service cluster routing table according to the cluster member registration message.

17. The service network according to claim 16, wherein the service cluster comprises:
a cluster-head node, configured to store routing information of multiple cluster member nodes, and forward messages between the multiple cluster member nodes.

## Patentansprüche

1. Verfahren zur Vernetzung eines Dienstnetzwerks (10), wobei das Dienstnetzwerk (10) mehrere Unternetzwerke (12, 14, 16) umfasst, jedes Unternetzwerk (12, 14, 16) mehrere Dienstrouter (30) umfasst, das Verfahren umfassend:
Bestimmen (S101) mindestens eines globalen Dienstrouters aus den mehreren Dienstroutern (30) jedes Unternetzwerks (12, 14, 16), wobei die globalen Dienstrouter der mehreren Unternetzwerke (12, 14, 16) eine globale P2P-Schicht (18) bilden, konfiguriert zum Routing von Nachrichten mindestens eines Diensttyps zwischen verschiedenen Unternetzwerken; und
Erzeugen (S 102) eines Dienstclusters (20, 22) durch die globale P2P-Schicht (18) und die mehreren Unternetzwerke (12, 14, 16), wobei das Dienstcluster (20, 22) konfiguriert ist, Nachrichten eines gleichen Diensttyps in dem Dienstcluster (20, 22) zu routen,
**dadurch gekennzeichnet, dass**
das Erzeugen eines Dienstclusters (20, 22) durch die globale P2P-Schicht und die mehreren Unternetzwerke (12, 14, 16) umfasst:
Rundsenden, von einem Ausgangsknoten an der globalen P2P-Schicht (18), einer Dienstcluster-Erzeugungsbenachrichtigung an jedes Unternetzwerk (12, 14, 16) durch die globale P2P-Schicht (18), wobei die Dienstcluster-Erzeugungsbenachrichtigung einen Diensttyp eines zu erzeugenden Dienstclusters umfasst;
wenn die Dienstrouter (30) in jedem Unternetzwerk (12, 14, 16) beurteilen, dass sie selbst zu dem Diensttyp gehören, Zurücksenden, durch die Dienstrouter (30) in jedem Unternetzwerk, einer Erzeugungsantwort des Dienstclusters (20, 22) an den Ausgangsknoten, um den Anschluss an das Dienstcluster (20, 22) zu beantragen;
Bestimmen, durch den Ausgangsknoten, eines Clusterkopfknotens des Dienstclusters (20, 22) gemäß der Dienstcluster-Erzeugungsantwort;
Senden, von dem Ausgangsknoten, einer Dienstcluster-Generationsbenachrichtigung, die Clusterkopfknoten-Informationen umfasst, an Dienstrouter (30), die sich bereits dem Dienstcluster in jedem Unternetzwerk angeschlossen haben;
Zurücksenden, durch die Dienstrouter (30), die sich bereits dem Dienstcluster (20, 22) in jedem Unternetzwerk angeschlossen haben, einer Clustermitglied-Registrationsnachricht an den Clusterkopfknoten; und
Generation, durch den Clusterkopf, einer Dienstcluster-Routingtabelle (306) gemäß der Clustermitglied-Registrationsnachricht.

2. Verfahren nach Anspruch 1, wobei die mehreren Unternetzwerke gemäß den physikalischen Netzwerken oder Verwaltungsdomänen aufgeteilt sind.

3. Verfahren nach Anspruch 1 oder 2, wobei ein Dienstrouter auf einen Diensttyp oder einen Teil des einen Diensttyps zugreift und der Dienstrouter einen gleichen Adressensuffix wie die Dienste, auf die der Dienstrouter zugreift, aufweist.

4. Verfahren nach Anspruch 1 oder 2, wobei das Bestimmen mindestens eines globalen Dienstrouters umfasst:
Wählen mindestens eines globalen Dienstrouters aus jedem Unternetzwerk oder Spezifizieren mindestens eines globalen Dienstrouters in jedem Unternetzwerk gemäß manuellen Konfigurationen.

5. Verfahren nach Anspruch 1, wobei die Dienstcluster-Erzeugungsantwort mindestens einen der folgenden Parameter umfasst: Leistungsinformationen, Lastinformationen, Adressinformationen des Dienstrouters.

6. Verfahren nach Anspruch 1, wobei die Dienstcluster-Generationsbenachrichtigung mindestens eines des Folgenden umfasst: eine Kennung eines Dienstclusters, eine Dienstnetzwerkadresse des Clusterkopfknotens, eine IP-Adresse des Clusterkopfknotens, eine Portnummer des Clusterkopfknotens und ein Dienstcluster-Routingprotokoll.

7. Verfahren nach Anspruch 1, wobei jeder globale Dienstrouter sein Adressensuffix als einen Parameter einer Hash-Funktion verwendet, um eine Kennung des Dienstrouters an der globalen P2P-Schicht zu berechnen.

8. Verfahren nach Anspruch 1, wobei das Verfahren vor dem Erzeugen eines Dienstclusters durch die globale P2P-Schicht (18) und die mehreren Unternetzwerke (12, 14, 16) ferner umfasst: Auslösen der Erzeugung eines Dienstclusters gemäß einer im Voraus eingestellten Dienstclustererzeugung-Auslösungsrichtlinie;
wobei die im Voraus eingestellte Dienstclustererzeugung-Auslösungsrichtlinie mindestens eines des Folgenden umfasst:
ein Verhältnis eines Verkehrsflusses eines zu messenden Diensttyps zu dem Verkehr der globalen P2P-Schicht (18), das größer ist als ein im Voraus eingestellter Schwellenwert;
ein Verhältnis eines Verkehrsflusses eines zu messenden Diensttyps an der globalen P2P-Schicht (18), das größer ist als ein im Voraus eingestellter Schwellenwert;
die Quantität des Zugriffs auf Dienstrouter (30) eines Dienstes eines zu messenden Diensttyps, die größer ist als ein im Voraus eingestellter Schwellenwert; und
eine durchschnittliche Anzahl von Routingsprüngen eines Dienstes eines zu messenden Diensttyps von einem Ausgangs-Anwendungsserver zu einem Ziel-Anwendungsserver, die größer ist als ein im Voraus eingestellter Schwellenwert.

9. Verfahren nach Anspruch 1, wobei das Verfahren vor dem Erzeugen eines Dienstclusters (20, 22) durch die globale P2P-Schicht (18) und die mehreren Unternetzwerke (12, 14, 16) ferner umfasst:
Speichern eines im Voraus definierten Diensttyps, konfiguriert zum Erzeugen eines Dienstclusters (20, 22), und Statusinformationen existierender Dienstcluster (20, 22) in einem Dienstverzeichnis oder einem Domänennamenserver.

10. Verfahren nach Anspruch 9, wobei das Verfahren vor dem Erzeugen eines Dienstclusters (20, 22) durch die globale P2P-Schicht (18) und die mehreren Unternetzwerke (12, 14, 16) ferner umfasst:
Beurteilen, durch einen Ausgangsknoten an der globalen P2P-Schicht, ob ein zu erzeugendes Dienstcluster (20, 22) existiert und ob der Diensttyp eines zu erzeugenden Dienstclusters (20, 22) der im Voraus definierte Diensttyp ist, durch Abfragen des Dienstverzeichnisses oder des Domänennamenservers; und
wenn das zu erzeugende Dienstcluster nicht existiert oder der Diensttyp davon der im Voraus definierte Diensttyp ist, Ausführen, durch den Ausgangsknoten an der globalen P2P-Schicht, eines Prozesses des Erzeugens des Dienstclusters (20, 22).

11. Verfahren zum Routing von Dienstnetzwerknachrichten, umfassend Vernetzen eines Dienstnetzwerks gemäß einem der vorhergehenden Ansprüche und ferner die folgenden Schritte umfassend
Empfangen einer Dienstinteraktionsnachricht, wobei die Dienstinteraktionsnachricht eine Ziel-Dienstadresse und einen Ziel-Diensttyp umfasst;
Routing, gemäß der Ziel-Dienstadresse und dem Ziel-Diensttyp, der Dienstinteraktionsnachricht an einen zugreifenden Dienstrouter (30) des Zieldienstes durch Verwendung mindestens eines des Unternetzwerks (12, 14, 16), der globalen P2P-Schicht (18) und des Dienstclusters (20, 22).

12. Verfahren nach Anspruch 11, wobei das Routing, gemäß der Ziel-Dienstadresse und dem Ziel-Diensttyp, der Dienstinteraktionsnachricht an einen zugreifenden Dienstrouter des Zieldienstes durch Verwendung mindestens eines des Unternetzwerks (12, 14, 16), der globalen P2P-Schicht (18) und des Dienstclusters (20, 22) umfasst:
wenn die Ziel-Dienstadresse zu dem Unternetzwerk gehört, Routing, durch das Unternetzwerk, der Dienstinteraktionsnachricht an den zugreifenden Dienstrouter des Zieldienstes in dem Unternetzwerk über ein Unternetzwerk-Routingprotokoll; oder
wenn die Ziel-Dienstadresse nicht zu dem Unternetzwerk gehört und der Typ des Zieldienstes der gleiche ist wie der Typ des Dienstclusters, Routing, durch das Dienstcluster, der Dienstinteraktionsnachricht an den zugreifenden Dienstrouter des Zieldienstes in dem Dienstcluster; oder
wenn die Ziel-Dienstadresse nicht zu dem Unternetzwerk gehört und der Typ des Zieldienstes von dem Typ des Dienstclusters verschieden ist, Routing, durch die globale P2P-Schicht, der Dienstinteraktionsnachricht an ein Heim-Unternetzwerk des Zieldienstes über ein globales Routingprotokoll; Weiterleiten, durch das Heim-Unternetzwerk des Zieldienstes, der Dienstinteraktionsnachricht an den zugreifenden Dienstrouter des Zieldienstes über ein Unternetzwerk-Routingprotokoll.

13. Verfahren nach Anspruch 12, wobei das Verfahren vor dem Routing, durch das Dienstcluster (20, 22), der Dienstroutingnachricht an den zugreifenden Dienstrouter (30) des Zieldienstes ferner umfasst:
Abfragen, durch den Dienstrouter, eines Dienstverzeichnisses oder eines Domänennamenservers daraufhin, ob der Zieldienst zu einem Dienstcluster gehört, das mit dem Zieldiensttyp korrespondiert, und Speichern erhaltener Abfrageergebnisse; und
nachdem ein im Voraus eingestellter Schwellenwert abläuft, Löschen der Abfrageergebnisse.

14. Verfahren nach Anspruch 12, wobei das Dienstcluster (20, 22) einen Clusterkopfknoten und mehrere Clustermitgliederknoten umfasst, wobei der Clusterkopfknoten konfiguriert ist, Routinginformationen der mehreren Clustermitgliederknoten zu speichern; und
das Routing, durch das Dienstcluster (20, 22), der Dienstinteraktionsnachricht an den zugreifenden Dienstrouter des Zieldienstes umfasst:
Abfragen, durch die Clustermitgliederknoten in dem Dienstcluster, des Clusterkopfknotens auf die Adresse des zugreifenden Dienstrouters des Zieldienstes gemäß der Adresse des Zieldienstes hin;
Zurücksenden, durch den Clusterkopfknoten, der Adresse des zugreifenden Dienstrouters des Zieldienstes an die Clustermitgliederknoten; und
Weiterleiten, durch die Clustermitgliederknoten, der Dienstinteraktionsnachricht an den zugreifenden Dienstrouter des Zieldienstes gemäß der Adresse des zugreifenden Dienstrouters des Zieldienstes.

15. Verfahren nach Anspruch 12, wobei das Dienstcluster (20, 22) einen Clusterkopfknoten und mehrere Clustermitgliederknoten umfasst, wobei der Clusterkopfknoten konfiguriert ist, Routinginformationen der mehreren Clustermitgliederknoten zu speichern;
wobei das Routing, durch das Dienstcluster, der Dienstinteraktionsnachricht an den zugreifenden Dienstrouter des Zieldienstes umfasst:
Weiterleiten, durch die Clustermitgliederknoten in dem Dienstcluster, der Dienstinteraktionsnachricht an den Clusterkopfknoten; und
Weiterleiten, durch den Clusterkopfknoten, der Dienstinteraktionsnachricht an den zugreifenden Dienstrouter des Zieldienstes gemäß der Adresse des Zieldienstes und den Routinginformationen.

16. Dienstnetzwerk (10), umfassend:
mehrere Unternetzwerke (12, 14, 16), wobei jedes Unternetzwerk (12, 14, 16) mehrere Dienstrouter (30) und mindestens einen globalen Dienstrouter umfasst;
eine globale P2P-Schicht (18), gebildet durch globale Dienstrouter in jedem Unternetzwerk (12, 14, 16) und konfiguriert, Nachrichten mindestens eines Diensttyps zwischen verschiedenen Unternetzwerken (12, 14, 16) zu routen; und
mindestens ein Dienstcluster (20, 22), gebildet durch mehrere Dienstrouter (30), die zum Zugreifen auf einen gleichen Diensttyp verantwortlich sind, und konfiguriert, Nachrichten eines gleichen Diensttyps in einem Dienstcluster (20, 22) zu routen,
**dadurch gekennzeichnet, dass**
das Dienstnetzwerk (10) konfiguriert ist, mindestens einen globalen Dienstrouter aus den mehreren Dienstroutern (30) jedes Unternetzwerks (12, 14, 16) zu bestimmen und das Dienstcluster durch die globale P2P-Schicht (18) und die mehreren Unternetzwerke zu erzeugen (S 102),
wobei das Dienstnetzwerk zum Erzeugen eines Dienstclusters durch die globale P2P-Schicht (18) und die mehreren Unternetzwerke konfiguriert ist zum Rundsenden, durch einen Ausgangsknoten an der globalen P2P-Schicht (18), einer Dienstcluster-Erzeugungsbenachrichtigung an jedes Unternetzwerk durch die globale P2P-Schicht (18), wobei die Dienstcluster-Erzeugungsbenachrichtigung einen Diensttyp eines zu erzeugenden Dienstclusters umfasst;
wenn die Dienstrouter in jedem Unternetzwerk beurteilen, dass sie selbst zu dem Diensttyp gehören, Zurücksenden, durch die Dienstrouter in jedem Unternetzwerk, einer Dienstcluster-Erzeugungsantwort an den Ausgangsknoten, um den Anschluss an das Dienstcluster zu beantragen;
Bestimmen, durch den Ausgangsknoten, eines Clusterkopfknotens des Dienstclusters gemäß der Dienstcluster-Erzeugungsantwort;
Senden, durch den Ausgangsknoten, einer Dienstcluster-Generationsbenachrichtigung (20, 22), die Clusterkopfknoten-Informationen umfasst, an Dienstrouter, die sich bereits dem Dienstcluster in jedem Unternetzwerk (12, 14, 16) angeschlossen haben;
Zurücksenden, durch die Dienstrouter, die sich bereits dem Dienstcluster in jedem Unternetzwerk (12, 14, 16) angeschlossen haben, einer Clustermitglied-Registrationsnachricht an den Clusterkopfknoten; und
Generieren, durch den Clusterkopf, einer Dienstcluster-Routingtabelle gemäß der Clustermitglied-Registrationsnachricht.

17. Dienstnetzwerk nach Anspruch 16, wobei das Dienstcluster umfasst:
einen Clusterkopfknoten, konfiguriert zum Speichern von Routinginformationen von mehreren Clustermitgliederknoten und Weiterleiten von Nachrichten zwischen den mehreren Clustermitgliederknoten.

## Revendications

1. Procédé de mise en réseau d'un réseau de services (10), dans lequel le réseau de services (10) comprend de multiples sous-réseaux (12, 14, 16), chaque sous-réseau (12, 14, 16) comprenant de multiples routeurs de services (30), le procédé comprenant :
la détermination (S101) d'au moins un routeur de services global parmi les multiples routeurs de services (30) de chaque sous-réseau (12, 14, 16), les routeurs de services globaux des multiples sous-réseaux (12, 14, 16) formant une couche P2P globale (18) configurée pour router des messages d'au moins un type de service entre différents sous-réseaux ; et
la création (S 102) d'une grappe de services (20, 22) par l'intermédiaire de la couche P2P globale (18) et des multiples sous-réseaux (12, 14, 16), la grappe de services (20, 22) étant configurée de façon à router des messages d'un même type de service dans la grappe de services (20, 22),
**caractérisé en ce que**
la création d'une grappe de services (20, 22) par l'intermédiaire de la couche P2P globale et des multiples sous-réseaux (12, 14, 16) comprend :
la diffusion, par un noeud d'origine au niveau de la couche P2P globale (18), d'une notification de création de grappe de services à chaque sous-réseau (12, 14, 16) par l'intermédiaire de la couche P2P globale (18), la notification de création de grappe de services comprenant un type de service d'une grappe de services à créer ;
lorsque les routeurs de services (30) de chaque sous-réseau (12, 14, 16) jugent qu'ils appartiennent eux-mêmes au type de service, le renvoi, par les routeurs de services (30) de chaque sous-réseau, d'une réponse de création de grappe de services (20, 22) au noeud d'origine pour demander à se joindre à la grappe de services (20, 22) ;
la détermination, par le noeud d'origine, d'un noeud de tête de grappe de la grappe de services (20, 22) conformément à la réponse de création de grappe de services ;
l'envoi, par le noeud d'origine, d'une notification de génération de grappe de services comprenant des informations de noeud de tête de grappe à des routeurs de services (30) qui se sont déjà joints à la grappe de services de chaque sous-réseau ;
le renvoi, par les routeurs de services (30) s'étant déjà joints à la grappe de services (20, 22) de chaque sous-réseau, d'un message d'enregistrement de membre de grappe au noeud de tête de grappe ; et
la génération, par la tête de grappe, d'une table de routage de grappe de services (306) conformément au message d'enregistrement de membre de grappe.

2. Procédé selon la revendication 1, dans lequel les multiples sous-réseaux sont divisés selon des réseaux physiques ou des demandes administratives.

3. Procédé selon la revendication 1 ou 2, dans lequel un routeur de services accède à un type de service ou à une partie d'un type de service et le routeur de services possède un même suffixe d'adresse que les services auxquels accède le routeur de services.

4. Procédé selon la revendication 1 ou 2, dans lequel la détermination d'au moins un routeur de services global comprend :
le choix d'au moins un routeur de services global dans chaque sous-réseau, ou la spécification d'au moins un routeur de services global dans chaque sous-réseau conformément à des configurations manuelles.

5. Procédé selon la revendication 1, dans lequel la réponse de création de grappe de services comprend au moins l'un des paramètres suivants : des informations de performances, des informations de charge, des informations d'adresses du routeur de services.

6. Procédé selon la revendication 1, dans lequel la notification de génération de grappe de services comprend au moins l'un des éléments suivants : un identifiant d'une grappe de services, une adresse de réseau de services du noeud de tête de grappe, une adresse IP du noeud de tête de grappe, un numéro de port du noeud de tête de grappe, et un protocole de routage de grappe de services.

7. Procédé selon la revendication 1, dans lequel chaque routeur de services global utilise son suffixe d'adresse en tant que fonction de hachage de façon à calculer un identifiant du routeur de services au niveau de la couche P2P globale.

8. Procédé selon la revendication 1, dans lequel, avant de créer une grappe de services par l'intermédiaire de la couche P2P globale (18) et des multiples sous-réseaux (12, 14, 16), le procédé comprend en outre : le déclenchement de la création d'une grappe de services conformément à une politique prédéfinie de déclenchement de la création d'une grappe de services ;
la politique prédéfinie de déclenchement de la création d'une grappe de services comprend au moins l'un des éléments suivants :
le fait qu'un rapport d'un flux de trafic d'un type de service à mesurer au trafic de la couche P2P globale (18) est supérieur à un seuil prédéfini ;
le fait qu'un rapport d'un flux de trafic d'un type de service à mesurer au niveau de la couche P2P globale (18) est supérieur à un seuil prédéfini ;
le fait que la quantité de routeurs de services d'accès (30) d'un service correspondant à un type de service à mesurer est supérieure à un seuil prédéfini ; et
le fait qu'un nombre moyen de bonds de routage d'un service correspondant à un type de service à mesurer depuis un serveur d'applications sources vers un serveur d'applications de destination est supérieur à un seuil prédéfini.

9. Procédé selon la revendication 1, dans lequel, avant de créer une grappe de services (20, 22) par l'intermédiaire de la couche P2P globale (18) et des multiples sous-réseaux (12, 14, 16), le procédé comprend en outre :
le stockage d'un type de service prédéfini configuré de façon à créer une grappe de services (20, 22) et des informations d'état de grappes de services existantes (20, 22) dans un répertoire de services ou un serveur de nom de domaine.

10. Procédé selon la revendication 9, dans lequel, avant de créer une grappe de services (20, 22) par l'intermédiaire de la couche P2P globale (18) et des multiples sous-réseaux (12, 14, 16), le procédé comprend en outre :
le jugement, par un noeud d'origine au niveau de la couche P2P globale, du fait de savoir si une grappe de services (20, 22) à créer existe et si le type de service d'une grappe de services (20, 22) à créer est le type de service prédéfini en interrogeant le répertoire de services ou le serveur de nom de domaine ; et
lorsque la grappe de services à créer n'existe pas et lorsque son type de service est le type de service prédéfini, l'exécution, par le noeud d'origine au niveau de la couche P2P globale, d'un processus de création de la grappe de services (20, 22).

11. Procédé de routage de messages de réseau de services, comprenant :
la mise en réseau d'un réseau de services selon l'une des revendications précédentes et comprenant en outre les étapes de :
réception d'un message d'interaction de services, le message d'interaction de services comprenant une adresse de service de destination et un type de service de destination ;
le routage, conformément à l'adresse de service de destination et au type de service de destination, du message d'interaction de services vers un routeur de services d'accès (30) du service de destination en utilisant au moins l'un du sous-réseau (12, 14, 16), de la couche P2P globale (18) et de la grappe de services (20, 22).

12. Procédé selon la revendication 11, dans lequel le routage, conformément à l'adresse de service de destination et au type de service de destination, du message d'interaction de services vers un routeur de services d'accès du service de destination en utilisant au moins l'un du sous-réseau (12, 14, 16), de la couche P2P globale (18) et de la grappe de services (20, 22) comprend :
lorsque l'adresse de service de destination appartient au sous-réseau, le routage, par l'intermédiaire du sous-réseau, du message d'interaction de services vers le routeur de services d'accès du service de destination dans le sous-réseau par l'intermédiaire d'un protocole de routage de sous-réseau ; ou
lorsque l'adresse de service de destination n'appartient pas au sous-réseau, et lorsque le type du service de destination est identique au type de la grappe de services, le routage, par l'intermédiaire de la grappe de services, du message d'interaction de services vers le routeur de services d'accès du service de destination dans la grappe de services ; ou
lorsque l'adresse de service de destination n'appartient pas au sous-réseau et lorsque le type du service de destination est différent du type de la grappe de services, le routage, par l'intermédiaire de la couche P2P globale, du message d'interaction de services vers un sous-réseau de départ du service de destination par l'intermédiaire d'un protocole de routage global ; le réacheminement, par le sous-réseau de départ du service de destination, du message d'interaction de services vers le routeur de services d'accès du service de destination par l'intermédiaire d'un protocole de routage de sous-réseau.

13. Procédé selon la revendication 12, dans lequel, avant le routage, par l'intermédiaire de la grappe de services (20, 22), du message de routage de services vers le routeur de services d'accès (30) du service de destination, le procédé comprend en outre :
l'envoi, par le routeur de services, d'une requête à un répertoire de services ou à un serveur de nom de domaine pour savoir si le service de destination appartient à une grappe de services correspondant au type de service de destination, et le stockage de résultats de requête obtenus ; et
après qu'un seuil prédéfini s'est écoulé, la suppression des résultats de requête.

14. Procédé selon la revendication 12, dans lequel la grappe de services (20, 22) comprend un noeud de tête de grappe et de multiples noeuds membres de grappes, dans lequel le noeud de tête de grappe est configuré pour stocker des informations de routage des multiples noeuds membres de grappes ; et
le routage, par l'intermédiaire de la grappe de services (20, 22), du message d'interaction de services vers le routeur de services d'accès du service de destination, comprend :
l'envoi, par les noeuds membres de grappes se trouvant dans la grappe de services,
d'une requête au noeud de tête de grappe de façon à obtenir l'adresse du routeur de services d'accès du service de destination conformément à l'adresse du service de destination ;
le renvoi, par le noeud de tête de grappe, de l'adresse du routeur de services d'accès du service de destination aux noeuds membres de grappes ; et
le réacheminement, par les noeuds membres de grappes, du message d'interaction de services vers le routeur de services d'accès du service de destination conformément à l'adresse du routeur de services d'accès du service de destination.

15. Procédé selon la revendication 12, dans lequel la grappe de services (20, 22) comprend un noeud de tête de grappe et de multiples noeuds membres de grappes, dans lequel le noeud de tête de grappe est configuré pour stocker des informations de routage des multiples noeuds membres de grappes ; et
le routage, par l'intermédiaire de la grappe de services, du message d'interaction de services vers le routeur de services d'accès du service de destination, comprend :
le réacheminement, par les noeuds membres de grappes se trouvant dans la grappe de services, du message d'interaction de services au noeud de tête de grappe ; et
le réacheminement, par le noeud de tête de grappe, du message d'interaction de services vers le routeur de services d'accès du service de destination conformément à l'adresse du service de destination et aux informations de routage.

16. Réseau de services (10) comprenant :
de multiples sous-réseaux (12, 14, 16), chaque sous-réseau (12, 14, 16) comprenant de multiples routeurs de services (20) et au moins un routeur de services global ;
une couche P2P globale (18) formée par des routeurs de services globaux dans chaque sous-réseau (12, 14, 16) et configurée de façon à router des messages d'au moins un type de service entre différents sous-réseaux (12, 14, 16) ; et
au moins une grappe de services (20, 22) formée par de multiples routeurs de services (30) responsables de l'accès à un même type de service, et configurée de façon à router des messages d'un même type de service dans une grappe de services (20, 22),
**caractérisé en ce que**
le réseau de services (10) est configuré pour déterminer au moins un routeur de services global parmi les multiples routeurs de services (30) de chaque sous-réseau (12, 14, 16), et pour créer (S102) ladite grappe de services par l'intermédiaire de la couche P2P globale (18) et des multiples sous-réseaux,
lequel réseau de services, pour créer une grappe de services par l'intermédiaire de la couche P2P globale (18) et des multiples sous-réseaux, est configuré pour la diffusion, par un noeud d'origine au niveau de la couche P2P globale (18), d'une notification de création de grappe de services vers chaque sous-réseau par l'intermédiaire de la couche P2P globale (18), la notification de création de grappe de services comprenant un type de service d'une grappe de services à créer ;
lorsque les routeurs de services de chaque sous-réseau jugent qu'ils appartiennent eux-mêmes au type de service, le renvoi, par les routeurs de services de chaque sous-réseau, d'une réponse de création de grappe de services au noeud d'origine pour demander à se joindre à la grappe de services ;
la détermination, par le noeud d'origine, d'un noeud de tête de grappe de la grappe de services conformément à la réponse de création de grappe de services ;
l'envoi, par le noeud d'origine, d'une notification de génération de grappe de services (20, 22) comprenant des informations de noeud de tête de grappe à des routeurs de services qui se sont déjà joints à la grappe de services dans chaque sous-réseau (12, 14, 16) ;
le renvoi, par les routeurs de services s'étant déjà joints à la grappe de services dans chaque sous-réseau (12, 14, 16), d'un message d'enregistrement de membre de grappe au noeud de tête de grappe ; et
la génération, par la tête de grappe, d'une table de routage de grappe de services conformément au message d'enregistrement de membre de grappe.

17. Réseau de services selon la revendication 16, dans lequel la grappe de services comprend :
un noeud de tête de grappe, configuré pour stocker des informations de routage de multiples noeuds membres de grappes, et le réacheminement de messages entre les multiples noeuds membres de grappes.
